# EUROPÄISCHE PATENTSCHRIFT

(11) **EP 2 626 722 B1**
(45) Veröffentlichungstag und Bekanntmachung des Hinweises auf die Patenterteilung: **21.09.2016**
(21) Anmeldenummer: 12154289.8
(22) Anmeldetag: 07.02.2012
(51) Int. Cl.: G01S 17/32, G01S 17/42, G01S 7/491, G01S 7/481

(54) **Optoelektronischer Sensor und Verfahren zur Erfassung und Abstandsbestimmung von Objekten**
Optoelectronic sensor and method for recording and determining the distance of an object
Capteur optoélectronique et procédé destiné à la détection et la détermination de l'éloignement d'objets

(43) Veröffentlichungstag der Anmeldung: 14.08.2013
(73) Patentinhaber: Sick AG, 79183 Waldkirch (DE)
(72) Erfinder: Feise, Gerold, 22335 Hamburg (DE); Huber, Gregor, 79110 Freiburg (DE); Kufner, Martin, 79215 Elzach (DE); Schmitz, Stephan, 79108 Freiburg (DE); Szerbakowski, Boris, 79183 Waldkirch (DE); Themel, Helmut, 79183 Waldkirch (DE)
(74) Vertreter: Hehl, Ulrich

(56) Entgegenhaltungen:
- WO-A1-2011/089608
- DE-A1- 10 210 000
- DE-A1-102008 009 180
- DE-A1-102010 005 012
- US-A- 5 497 160

## Beschreibung

Die Erfindung betrifft einen optoelektronischen Sensor, insbesondere einen Laserscanner, sowie ein Verfahren zur Erfassung und Abstandsbestimmung von Objekten mit einem Lichtlaufzeitverfahren unter Verwendung von Pseudozufallscodefolgen auf dem Sendestrahl und einer entsprechenden empfangsseitigen Korrelation nach dem Oberbegriff von Anspruch 1 beziehungsweise 14.

Für Abstandsmessungen, die einen großen horizontalen Winkelbereich des Messsystems erforderlich machen, eignen sich optoelektronische Systeme und besonders Laserscanner. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder durch mehrere Antastungen desselben Objekts an verschieden Stellen dessen Kontur bestimmen Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Scanner bewegen sich in einem Spannungsfeld zwischen Reichweite, Laserleistung und Größe der Empfangsoptiken. Begrenzende Faktoren sind unter anderem die Herstellkosten und die Augenschutzbedingungen, die nur ein begrenztes Laserbudget zulassen. Messtechnisch gesehen sind ultrakurze Pulse mit hohen Peakleistungen und eine komplette Digitalisierung des Empfangssignals in hoher Auflösung für die weitere Datenverarbeitung wünschenswert. Eine solche Umsetzung ist aber zu akzeptablen Kosten nicht erreichbar. Dabei ist zu beachten, dass eine Millimeterauflösung der Entfernungsbestimmung nur Lichtlaufzeiten im Bereich von Pikosekunden entspricht, so dass die Zeitskalen ganz erhebliche Herausforderungen an die Signalverarbeitung stellen, die nur mit hochpreisigen Bauelementen erzielt werden.

Um auch mit Pulsen geringerer Sendeleistung einen guten Signal-Rauschabstand zu erzielen, sind statistische Mittelungsverfahren bekannt. Dabei werden je Messwert eine Vielzahl von Pulsen ausgesandt und die daraufhin jeweils gemessenen Empfangssignale überlagert. So mitteln sich zufällige Rauscheffekte aus, während das Nutzsignal bei Mittelung wegen seiner systematischen Natur erhalten bleibt. Durch solche Mittelung kann man den Signal-Rauschabstand mit der Wurzel der Anzahl wiederholt ausgesandter Pulse verbessern. Die Reichweite des Sensors wächst dann wegen der 1/r²-Abhängigkeit nur mit der vierten Wurzel der Pulsanzahl. Außerdem muss jeder zu mittelnde Puls nacheinander die Messtrecke durchlaufen. Wegen dieser sogenannten Roundtripzeit verhält sich die Winkelauflösung bei einem Mittelungsverfahren antiproportional zur Pulszahl, da sich der Fahrstrahl des Scanners während der vielfach abzuwartenden Roundtripzeit weiterdreht.

Die DE 10 2010 005 012 A1 offenbart einen optoelektronischen Scanner zur Überwachung eines Schutzfeldes, dessen in das Schutzfeld ausgesandte Signale jeweils nach dem Frequenzspreizverfahren (Spread Spectrum) mit einem Pseudozufallsrauschcode moduliert sind. Damit wird zwar die Störfestigkeit erheblich verbessert, was auch für eine Reichweitenerhöhung genutzt werden kann. Für die Bestimmung des Empfangszeitpunkts bleibt aber auch dieser Scanner darauf angewiesen, das Empfangssignal mit einem entsprechend teuren Baustein hinreichend schnell abzutasten.

Aus der US 5 497 160 ist ein Verfahren für eine verbesserte Autokorrelation in mit Pseudozufallsfolgen codierten Systemen bekannt. Darin soll die Robustheit gegenüber Radarzielen außerhalb einer gewünschten Reichweite verbessert werden, indem der relative Phasenunterschied zwischen zwei Phasenzuständen einer bi-phasischen Modulation angepasst wird.

Daher ist Aufgabe der Erfindung, einen gattungsgemäßen Sensor anzugeben, der eine hohe Reichweite und Messgenauigkeit erzielt. Zugleich soll in einer Weiterbildung die Möglichkeit einer hohen Winkelauflösung geschaffen sein.

Diese Aufgabe wird durch einen optoelektronischen Sensor sowie ein Verfahren zur Erfassung und Abstandsbestimmung von Objekten gemäß Anspruch 1 und 14 gelöst. Dabei geht die Lösung von dem Grundgedanken aus, den Taststrahl mit einer Pseudozufallscode gemäß einem Frequenzspreizverfahren zu codieren, so dass das Nutzsignal durch Korrelation mit der bekannten Pseudozufallscodefolge von Störern unterschieden werden kann. Um eine Zeitbestimmung des Korrelationsmaximums im Subsamplingbereich vornehmen zu können, werden dann die Zeitraster der Pseudozufallscodefolge und der Abtastung gegeneinander verstimmt. Dies bedeutet, dass die Chiplänge, also die Dauer der einzelnen Codeelemente oder Chips der Pseudozufallscodefolge, und die Abtastperiode zwischen zwei abgetasteten Werten des Empfangssignals voneinander abweichen. Dadurch liegen zumindest im relevanten Bereich der Umgebung des Korrelationsmaximums nur wenige Punkte, wenn nicht gar kein Punkt dieser Zeitraster übereinander. Dies gilt auch bei gegenseitiger Verschiebung der Zeitraster, wie sie während der Korrelation vorgenommen werden.

Dadurch wird das Korrelationsmaximum quasi verwaschen, also auf der Zeitachse verbreitert, wobei dies durch einen Verlust in der Peakhöhe erkauft wird, also einem etwas verringerten Signal-Rauschabstand. Dieser Verlust ist hinnehmbar und wäre ansonsten auch durch eine etwas längere Pseudozufallscodefolge ausgleichbar. Durch das zeitliche Verschmieren wird aber eine wesentlich bessere Zeitauflösung erzielt, als wenn die beiden Zeitraster genau übereinander liegen.

Die Erfindung hat den Vorteil, dass der Sensor durch die Frequenzspreizung einen größeren Signal-Rauschabstand und damit eine bessere Störfestigkeit und Reichweite erzielt. Im Gegensatz zu einem Mittelungsverfahren verbessert sich die Korrelation nicht nur mit der Wurzel, sondern bei geeigneter Wahl der Pseudozufallscodefolge sogar linear mit der Anzahl der ausgesandten Pulse in der Pseudozufallscodefolge. Dadurch wird unter der Berücksichtigung der einleitend genannten 1/r²-Beziehung eine Entfernungserhöhung mit der Wurzel statt mit der vierten Wurzel der Anzahl der Pulse erzielt. Zugleich wird durch die verstimmten Zeitraster eine hohe Messgenauigkeit durch die hohe empfangsseitige Zeitauflösung erreicht, die besser ist als die Abtastfrequenz des Empfangssignals. Dazu werden keine besonders leistungsfähigen Bauteile benötigt, im Gegenteil ist die Implementierung relativ einfach, weil sie auf einer geschickten Codierung des Sendelichts und einer einfachen Manipulation der Zeitraster beruht. Der Empfangszweig kommt dabei mit geringeren Dynamikanforderungen aus. Das System ist zugleich mehrechofähig, kann also auch beispielsweise Objekte hinter einer Glasscheibe oder unter gestörten Umgebungsbedingungen erfassen, wie in Schnee, Regen oder Staub. Ähnlich können bei einem Kantentreffer die unterschiedlichen Entfernungen erkannt und gemessen werden.

Die Verstimmung kann auf systematische Weise aus einer einfachen Regel bestimmt sein, etwa durch eine gegenseitige Frequenzverschiebung, aber auch zwischen je zwei Rasterpunkten einzeln vorgegeben oder in sich erneut pseudozufällig sein. In einer bevorzugten Ausführungsform ist das erste Zeitraster so gewählt, dass die Codeelemente untereinander eine unterschiedliche Länge aufweisen, insbesondere in pseudozufälliger Weise. Das entspricht quasi einer sendeseitigen Verjitterung des ersten Zeitrasters und ist ganz einfach zu implementieren, indem in der Pseudozufallsfolge zusätzlich zu ihren Amplitudenwerten noch jeweils ein Längenwert definiert wird.

Vorzugsweise ist das zweite Zeitraster durch eine Verjitterung der Abtastung in dem A/D-Wandler verstimmt. Das ist also eine empfangsseitige Verjitterung. Man führt dem an sich regelmäßigen Abtasttakt gezielt einen deterministischen oder nicht deterministischen Rauschterm hinzu.

In einer alternativen vorteilhaften Ausführungsform ist das erste Zeitraster regelmäßig und relativ zu dem zweiten Zeitraster verkürzt oder verlängert. Die Chipdauer wird also für alle Chips der Sendepulsfolge etwas verlängert oder verkürzt. Die Abtastung erfolgt entsprechend auf einem etwas groberen oder etwas feineren Zeitraster, und auch der Korrelationsfilter in der Korrelationseinheit bleibt auf dieses Zeitraster und die bekannte Pseudozufallscodefolge eingestellt. Dabei kann das zweite Zeitraster ebenfalls regelmäßig oder nochmals verjittert sein, wobei sich im letztgenannten Fall die sende- und empfangsseitigen Verwaschungseffekte addieren. Die Verkürzung beziehungsweise Verlängerung ist aber eine relative Betrachtung. Wenn die Abtastung verstimmt wird, also eine kürzere oder längere Abtastperiode gewählt wird, erreicht man damit genauso ein gegenüber dem zweiten Zeitraster verlängertes oder verkürztes erstes Zeitraster, und ebenso durch Mischformen, in denen beide Zeitraster verändert werden. Eine solche Verkürzung oder Verlängerung sollte so gewählt werden, dass die gewünschte Verschmierung auf der Zeitachse tatsächlich stattfindet. Es ist simulativ möglich, die systematischen Fehler bei der Bestimmung des Empfangszeitpunkts zu schätzen und dafür eine optimale Verstimmung zu finden.

Die Verstimmung ist vorzugsweise so gewählt, dass das Korrelationssignal im Bereich des Korrelationsmaximums symmetrisch ist. Denn zunächst führt die Verstimmung, insbesondere wenn sie durch relative gegenseitige Verkürzung oder Verlängerung der Zeitraster erzeugt ist, zu einem asymmetrischen Korrelationsmaximum, dessen zeitliche Lage sich möglicherweise weniger genau und jedenfalls nur mit erhöhtem Rechenaufwand finden lässt.

Um diese Symmetrie zu erreichen, ist vorzugsweise das erste Zeitraster zum Aussenden einer ersten Pseudozufallscodefolge verkürzt und dann zum Aussenden einer zweiten Pseudozufallscodefolge verlängert oder umgekehrt. Die Verkürzung und Verlängerung sollten dabei gerade so bemessen sein, dass tatsächlich Symmetrie in dem Bereich um das Korrelationsmaximum entsteht, beispielsweise indem die Verkürzung und die Verlängerung sich gerade gegenseitig kompensieren.

Bevorzugt unterscheiden sich dabei die erste Pseudozufallscodefolge und die zweite Pseudozufallscodefolge voneinander, sind insbesondere orthogonal zueinander. Beispielsweise ist die zweite Pseudozufallscodefolge die Negierung der ersten Pseudozufallscodefolge. Achtet man nicht auf unterschiedliche Pseudozufallscodefolgen, können nämlich in der Korrelation unerwünschte Beiträge durch Korrelation der beiden Pseudozufallscodefolgen untereinander entstehen.

In einer vorteilhaften Alternative weisen der A/D-Wandler und die Korrelationseinheit zwei Kanäle auf, um das Empfangssignal in einem ersten Kanal mit einem verkürzten zweiten Zeitraster und in einem zweiten Kanal mit einem verlängerten zweiten Zeitraster abzutasten, die jeweiligen abgetasteten Empfangssignale einzeln mit der Pseudozufallscodefolge zu korrelieren und anschließend zu dem Korrelationssignal aufzuaddieren. Die Symmetrisierung wird hier also nicht sendeseitig durch zwei Pseudozufallscodefolgen, sondern empfangsseitig erreicht. Die beiden Teilkorrelationen in den beiden Kanälen mit unterschiedlichen Verstimmungen ergeben nach dem Aufaddieren wieder ein symmetrisches Korrelationssignal, wenn die Verstimmungen entsprechend kompensatorisch aneinander angepasst sind.

Die Auswertungseinheit ist bevorzugt dafür ausgebildet, die zeitliche Position des Empfangsmaximums anhand einer symmetrischen Vergleichsfunktion aufzufinden, insbesondere mittels Parabelfit. Das ist genau und einfach zu implementieren. Erst durch die Symmetrisierung der Korrelationsfunktion wird eine solche Auswertung mit der erfindungsgemäßen Verstimmung verträglich, denn beispielsweise ein Parabelfit an eine asymmetrische Korrelationsfunktion wäre so ungenau, dass der Gewinn in der zeitlichen Präzision zumindest größtenteils wieder verloren ginge.

Die Pseudozufallscodefolge ist bevorzugt eine m-Sequenz (Maximum length sequence). Diese binäre Pseudozufallsfolge ist an sich bekannt und eignet sich für die Strahlcodierung in einem erfindungsgemäßen Sensor besonders. Grundsätzlich können aber auch andere Pseudozufallscodefolgen verwendet werden. Beispielsweise nennt die eingangs schon zitierte DE 10 2010 005 012 A1 eine Auswahl derartiger Pseudozufallscodefolgen, wie Barker Codes, Goldcodes, Kasami-Sequenzen oder Hadamar-Walsh-Sequenzen.

Der Sensor ist bevorzugt dafür ausgebildet, nach Aussenden einer Pseudozufallscodefolge nur eine der maximalen Messreichweite entsprechende Roundtripzeit abzuwarten und dann die nachfolgende Pseudozufallscodefolge auszusenden. Die Chips der Pseudozufallscodefolge werden also direkt nacheinander ausgesandt. Die Dauer eines Messintervalls ist daher gegenüber einem Scanner mit Einzelpulsbetrieb nur um die Dauer der Pseudozufallscodefolge verlängert. Diese Geschwindigkeit der Messung schlägt sich direkt auf die Winkelauflösung nieder, da sich die Ablenkeinheit des Sensors während der Messung weiterbewegt. Deshalb ist es ohne allzu große Einbußen in der Winkelauflösung möglich, durch Verlängerung der Pulsfolge einen besseren Signal-Rauschabstand zu erzielen. Bei einem Mittelungsverfahren dagegen muss nach jedem zu mittelnden Puls die Roundtripzeit abgewartet werden. Dort besteht also eine ungünstige antiproportionale Beziehung zwischen der die Reichweite mitbestimmenden Statistiktiefe und der Winkelauflösung. Die Erfindung ist damit einem Mittelungsverfahren in gleich zwei wichtigen Sensorcharakteristika überlegen, denn nicht nur steigt die Reichweite mit der Wurzel der Anzahl an Chips in der Pseudozufallsfolge, sondern diese Reichweitenerhöhung wirkt sich auch so gut wie nicht auf die Winkelauflösung aus.

Der Sensor ist in einer bevorzugten Weiterbildung dafür ausgebildet, nach Aussenden einer Pseudozufallscodefolge sofort oder jedenfalls ohne eine der maximalen Messreichweite entsprechende Roundtripzeit abzuwarten die nächste Pseudozufallscodefolge auszusenden, wobei die Pseudozufallscodefolgen untereinander orthogonal sind. Hierdurch wird die Winkelauflösung nur noch durch die Länge der Pseudozufallscodefolge limitiert, die Roundtripzeit auf der Messstrecke spielt keine Rolle mehr. Die Messabfolge ist damit sogar noch deutlich schneller als bei einem Einzelpulsverfahren. Das ist nur bei einer echten Sendepulscodierung wie durch Pseudozufallscode möglich, bei der hinreichend orthogonale Codierungen gefunden werden können. Das Licht der Einzelmessungen kann dadurch, nur noch durch Augenschutzbedingungen limitiert, gleichzeitig auf der Messstrecke unterwegs sein und dennoch anhand der Korrelation unterschieden werden, was praktisch einer hochgradig parallelen Mehrfachmessung entspricht und entsprechend leistungsstarke, vorzugsweise mehrkanalige Auswertungen voraussetzt.

Vorzugsweise ist zwischen Lichtempfänger und A/D-Wandler ein Filterelement vorgesehen, beispielsweise ein Bandpass, um das unipolare Empfangssignal in ein bipolares Empfangssignal zu wandeln. Da es kein negatives Licht gibt, ist das Empfangssignal zunächst notwendig unipolar. Durch ein solches Filter kann es in ein bipolares Signal, also eine Schwingung gewandelt werden. Das verhindert eine energieabhängige Pulsverbreiterung, welche die Korrelation bei hohen Remissionen verschlechtert. Auch das gleichlichtabhängige Rauschen des Lichtempfängers wird begrenzt. Außerdem wird durch bipolare Abtastung mit lediglich einem zusätzlichen Komparator der Wertebereich binärer Zufallsfolgen von auf -1, 0, +1 erweitert, was zusätzliche Codierungen ermöglicht.

Prinzipiell kann anstelle einer binären Pseudozufallscodefolge auch eine Quantisierung mit mehr als einem Bit erfolgen. Die größere Mächtigkeit der Codierung ermöglicht dann, mit noch weniger Chips und damit kürzeren Sendesignalen noch mehr Signal-Rauschabstand und damit Reichweite und Störfestigkeit zu gewinnen. Ebenso ist durch eine solche Erhöhung der Quantisierungstiefe eine Herabsetzung der Abtastfrequenz und damit der Einsatz noch kostengünstigerer Hardware denkbar.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung durch einen Laserscanner;
- Fig. 2: einen beispielhaften schematischen Zeitverlauf einer Pseudozufallscodefolge zur Erläuterung einer Verstimmung durch Verkürzung;
- Fig. 3: einen beispielhaften schematischen Zeitverlauf zweier aufeinanderfolgender Pseudozufallscodefolgen zur Erläuterung einer symmetrischen Verstimmung durch Verkürzung und Verlängerung;
- Fig. 4: vier beispielhafte Korrelationssignale für ein unverstimmtes Korrelationssignal und je ein durch Verstimmung mittels Verkürzung, Verlängerung und symmetrische Verkürzung und Verlängerung entstandenes Korrelationsmaximum;
- Fig. 5a: ein Zeitschema für eine Messung der Lichtlaufzeit bei einem Einzelpulsverfahren;
- Fig. 5b: ein Zeitschema für eine Messung der Lichtlaufzeit bei einem Pulsmittelungsverfahren;
- Fig. 5c: ein Zeitschema für eine Messung der Lichtlaufzeit bei Verwendung von Pseudozufallscodefolgen; und
- Fig. 5d: ein Zeitschema für mehrere parallele Messungen der Lichtlaufzeit bei Verwendung mehrerer orthogonaler Pseudozufallscodefolgen.

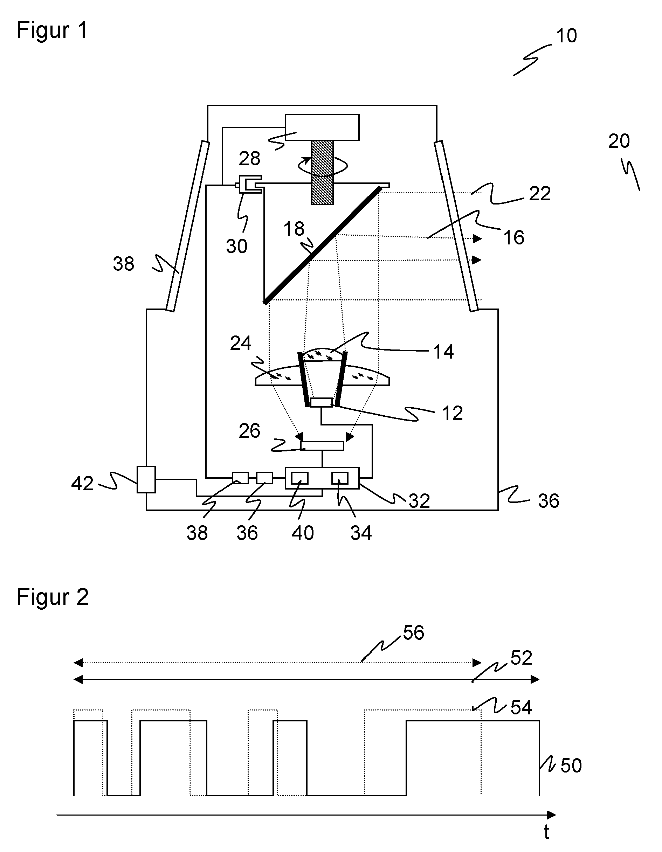

Fig. 1 zeigt eine schematische Schnittdarstellung durch einen erfindungsgemäßen optoelektronischen Sensor in einer Ausführungsform als Laserscanner 10. Ein Lichtsender 12, beispielsweise mit einer Laserlichtquelle, erzeugt mit Hilfe einer Sendeoptik 14 einen Sendelichtstrahl 16. Der Sendelichtstrahl 16 wird mittels einer Ablenkeinheit 18 in einen Überwachungsbereich 20 ausgesandt und dort von einem gegebenenfalls vorhandenen Objekt remittiert. Das remittierte Licht 22 gelangt wieder zu dem Laserscanner 10 zurück und wird dort über die Ablenkeinheit 18 mittels einer Empfangsoptik 24 von einem Lichtempfänger 26 detektiert, beispielsweise einer Photodiode oder für höhere Empfindlichkeit einer Lawinenphotodiode (APD). Bei dem dargestellten Laserscanner 10 befindet sich der Lichtsender 12 und dessen Sendeoptik 14 in einer zentralen Öffnung der Empfangsoptik 24. Dies ist nur eine beispielhafte Möglichkeit der Anordnung. Die Erfindung umfasst daneben alternative Lösungen, etwa mit einem eigenen Spiegelbereich für den Sendelichtstrahl 16 oder mit Teilerspiegeln.

Die Ablenkeinheit 18 wird von einem Motor 28 in eine kontinuierliche Drehbewegung mit einer Scanfrequenz versetzt. Dadurch tastet der Sendelichtstrahl 16 während jeder Scanperiode, also einer vollständigen Umdrehung bei der Scanfrequenz, eine Ebene ab. Am Außenumfang der Ablenkeinheit 18 ist eine Winkelmesseinheit 30 angeordnet, um die jeweilige Winkelstellung der Ablenkeinheit 18 zu erfassen. Die Winkelmesseinheit 30 wird hier beispielhaft von einer Strichscheibe als Winkelmaßverkörperung und einer Gabellichtschranke als Abtastung gebildet.

Eine Auswertungseinheit 32, die zugleich Steuerungsfunktionen des Laserscanner 10 übernimmt, ist mit dem Lichtsender 12, dem Lichtempfänger 26, dem Motor 28 und der Winkelmesseinheit 30 verbunden. Eine Sendeansteuerung 34 der Auswertungseinheit 32 veranlasst den Lichtsender 12, dem Sendelichtstrahl 16 eine Pseudozufallscodefolge aufzumodulieren. Auf dem Empfangspfad ist ein A/D-Wandler 36 angeordnet, insbesondere ein einfacher Komparator oder Binarisierer, um das Signal des Lichtempfängers 26 mit einer Abtastfrequenz zu digitalisieren. Vor dem A/D-Wandler 36 kann optional noch ein Filter 38 angeordnet sein, beispielsweise ein Bandpassfilter, um das Empfangssignal in ein bipolares Signal zu wandeln. Das digitalisierte oder abgetastete Empfangssignal wird einer Korrelationseinheit 40 der Auswertungseinheit 32 zugeführt und dort mit der Pseudozufallscodefolge korreliert, die auch für die Modulation des Sendelichtstrahls 16 verwendet wurde.

In dem so erhaltenen Korrelationssignal bestimmt die Auswertungseinheit 32 die Lage des Korrelationsmaximums und daraus einen Empfangszeitpunkt. Mit Hilfe des Sendezeitpunkts wird so die Lichtlaufzeit und daraus über die Lichtgeschwindigkeit ein Distanzwert zu einem angetasteten Objekt berechnet. Die jeweilige Winkelstellung, unter welcher dabei der Sendelichtstrahl 16 ausgesandt wurde, ist der Auswertungseinheit 32 von der Winkelmesseinheit 30 bekannt. Somit stehen nach jeder Scanperiode über den Winkel und die Entfernung zweidimensionale Polarkoordinaten aller Objektpunkte in dem Überwachungsbereich 20 zur Verfügung. Damit sind die Objektpositionen beziehungsweise Objektkonturen bekannt und können über eine Schnittstelle 42 ausgegeben werden. Die Schnittstelle 34 dient umgekehrt auch als Parametrierschnittstelle, über welche der Auswertungseinheit 32 Daten eingespielt werden können. Alternativ kann eine eigene Parametrierschnittstelle vorgesehen sein. Bei Anwendungen in der Sicherheitstechnik kann die Schnittstelle 42 sicher ausgebildet, insbesondere ein sicherer Ausgang (OSSD, Output Signal Switching Device) für ein sicherheitsgerichtetes Abschaltsignal bei Erkennen einer Schutzfeldverletzung sein.

Der Laserscanner 10 ist in einem Gehäuse 36 untergebracht, welches eine umlaufende Frontscheibe 38 aufweist. Die Geometrie des Gehäuses 36 und der Frontscheibe 38 sind ebenso wie die Gestaltung von Sende- und Empfangskanal rein beispielhaft zu verstehen. Es sind zahlreiche alternative Konzepte bekannt, bei denen die Erfindung ebenfalls einsetzbar ist.

Somit verwendet der Laserscanner 10 eine Codierung nach dem Frequenzspreizverfahren mit einer Pseudozufallscodefolge. Damit wird erreicht, dass der Abstand des globalen Maximums der Korrelation zum nächst höheren Maximum möglichst groß und somit maximal invariant gegenüber allen zeitlichen Verschiebungen ist. Damit wird die Erkennung von Mehrfachechos optimiert, also Empfangssignalen von verschiedenen Objekten oder Objektbereichen in unterschiedlichen Abständen zu dem Laserscanner 10. Solche Mehrfachechos spiegeln sich im Korrelationsergebnis als weitere Maxima oder als Verformung des Hauptmaximums wider. Der Laserscanner 10 wird durch die Codierung auch störsicherer gegenüber anderen Sensoren mit anderen Codierungen.

Die Kosten für die gewünschte Messauflösung sind ohne zusätzliche Maßnahmen sehr hoch. Um eine Entfernungsauflösung im Millimeterbereich zu erreichen, sind Abtastraten im Pikosekundenbereich notwendig. Als Beispiel wird als Pseudozufallscodefolge eine m-Sequenz von 127 Chips bei einer Pulslänge oder Chiplänge von 8ns betrachtet, deren Empfangssignal mit 1GHz abgetastet wird. Noch schnellere Abtastungen samt nachgelagerter Verarbeitung erfordern unverhältnismäßig kostenintensive Bauteile. Die Beispielsequenz enthält 64 mal eine Eins. Die Energie ist damit gegenüber dem einzelnen Puls um den Faktor 64 erhöht, wobei sich dies auch in einem linearen Zusammenhang positiv auf die Korrelation auswirkt. Die Auflösung der Chips von 8ns entspricht jedoch lediglich einer Messauflösung von 1,2m, und die Abtastpunkte liegen noch um 1ns entsprechend 15cm Messauflösung auseinander.

Deshalb ist erfindungsgemäß vorgesehen, die Zeitraster der Pseudozufallscodefolge und der Abtastung gegeneinander zu verstimmen. In dem Beispiel einer regelmäßigen 8-fachen Überabtastung von 1 GHz der Chips der Länge 8ns liegt das Chipraster genau auf jedem achten Abtastpunkt. Diese Regelmäßigkeit soll durch die Verstimmung aufgebrochen werden, so dass zumindest die meisten Rasterpunkte für die Pseudozufallscodefolge gerade nicht mehr mit Abtastpunkten zur Deckung kommen. Dadurch werden effektiv Zwischenabtastungen erreicht, denn in die Korrelation fließt Information auch aus den Zeitbereichen zwischen zwei ursprünglichen Abtastpunkten ein, die anschließend durch einen Funktionsfit des Korrelationsmaximums für eine Zeitbestimmung mit Subsamplinggenauigkeit genutzt wird. Anstatt also die gewünschte Messgenauigkeit mit einer sehr hohen Abtastrate zu erreichen, wird die Pulsdauer beziehungsweise Chipdauer in Bezug auf die Abtastperiode verändert.

Die Verstimmung kann in einer Ausführungsform der Erfindung sendeseitig durch gezielte Veränderung der individuellen Chiplängen oder empfangsseitig durch eine Verjitterung der Abtastung erreicht werden. Im Folgenden wird anhand der Figuren 2 bis 4 eine alternative Ausführungsform mit einer systematischen Verstimmung erläutert.

Figur 2 zeigt schematisch den Zeitverlauf einer Pseudozufallscodefolge. Mit durchgezogener Linie ist die unverstimmte Pseudozufallscodefolge 50 gezeigt. Der darüber gezeigte durchgezogene Pfeil 52 entspricht der Gesamtdauer der Pseudozufallscodefolge. Eine gestrichelt dargestellte verkürzte Pseudozufallscodefolge 54 entsteht durch zeitliches Stauchen aus der unverstimmten Pseudozufallscodefolge 50. Die Stauchung ist an dem gestrichelten Pfeil 56 der zugehörigen Gesamtdauer gut abzulesen.

In der Figur 2 sind keine Zahlenwerte angegeben, um den beispielhaften Charakter zu betonen. Die Amplitude wechselt im Falle einer m-Sequenz oder allgemein einer binären Pseudozufallscodefolge zwischen einem Wert für die binäre Eins und einem Wert für die binäre Null. Auf der Zeitachse kann, um im obigen Beispiel zu bleiben, die unverstimmte Chiplänge 8 ns betragen. Auf diesen Wert und die verwendete Pseudozufallscodefolge ist das Korrelationsfilter der Korrelationseinheit 40 eingestellt. Tatsächlich wird aber die verkürzte Pseudozufallscodefolge 54 mit einer leicht veränderten Pulsdauer oder Chiplänge von beispielsweise 7,968ns ausgesandt.

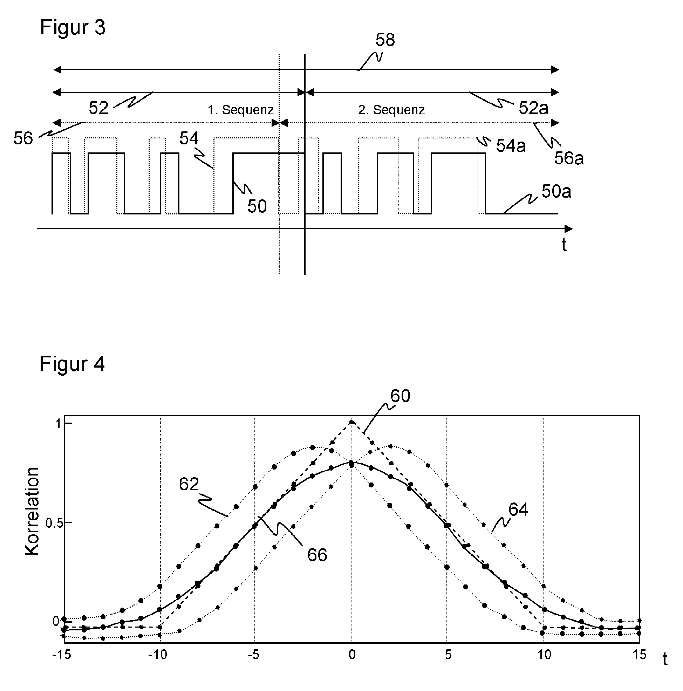

Figur 4 zeigt beispielhafte Korrelationsverläufe. Die ideale Korrelation zu der unverstimmten Pseudozufallscodefolge 50 führt zu einem Dreiecksverlauf 60. Ein Funktionsfit, nämlich hier eine lineare Regression, zur verbesserten Zeitauflösung ist bei einem Dreieck aber nicht sonderlich effektiv. Der Korrelationsverlauf 62 zu der verkürzten Pseudozufallscodefolge enthält wesentlich mehr Informationen, so dass die Bestimmung von deren Maximum zu einer effektiv erhöhten Messauflösung auch besser als die ±75mm genutzt werden kann, die eigentlich durch die 1 GHz-Abtastung vorgegeben ist. Die Korrelation wird durch die Verstimmung sozusagen verwaschen, aus dem idealen Dreiecksverlauf 60 entsteht ein abgerundeter Bogen mit mehreren für einen Funktionsfit nutzbaren Stützstellen. Schon leichte zeitliche Verschiebungen der empfangenen Pseudozufallscodefolge schlagen sich sofort auch in einer Veränderung des Korrelationsergebnisses und der Lage des Maximums nieder. Erkauft wird dies durch ein leichtes Absinken der Amplitude des Korrelationsmaximums und damit einem etwas kleineren Signal-Rauschabstand. Dieser nachteilige Effekt wird jedoch durch die bessere Messauflösung überkompensiert, und der Signal-Rauschabstand könnte bei Bedarf durch eine längere Pseudozufallscodefolge ausgeglichen werden.

Die Situation ist völlig analog, wenn die Pseudozufallscodefolge 50 nicht verkürzt, sondern verlängert wird. Figur 4 zeigt auch den hierzu gehörigen Korrelationsverlauf 64.

Sowohl der nach Verkürzung als auch der nach Verlängerung der Pseudozufallscodefolge 50 entstehende Korrelationsverlauf 62, 64 zeigt aber eine Asymmetrie. Diese Asymmetrie ist unerwünscht, weil ihre mathematische Approximation beziehungsweise der Funktionsfit zur zeitlichen Lagebestimmung aufwändig ist. Außerdem sind weitere Einflüsse, welche die Form des Korrelationsmaximums verändern, aufgrund der Asymmetrie weniger leicht erkennbar.

Deshalb ist in einer weiteren Ausführungsform der Erfindung vorgesehen, das Korrelationsmaximum zu symmetrisieren. Das wird durch geeignete Modifikation der Länge der Chips über die Pulsfolge hinweg erreicht. Figur 3 zeigt schematisch den Zeitverlauf einer geeignet modifizierten Pseudozufallscodefolge. Dabei wird die ursprüngliche Pseudozufallscodefolge ein weiteres Mal gesendet, dabei aber nicht gestaucht, sondern gestreckt, und zwar in einem Maße, dass die Stauchung gerade kompensiert wird. Demnach ist die Gesamtsequenz in eine erste Sequenz und eine zweite Sequenz unterteilbar. Die linke Hälfte der Figur 3 entspricht damit der Figur 2. In der rechten Hälfte der Figur 3 ist die korrespondierende Situation mit einer zeitlichen Streckung illustriert. Die unverstimmte Pseudozufallscodefolge 50 wird ein weiteres Mal, nun aber als invertierte unverstimmte Pseudozufallscodefolge 50a mit der Dauer 52a gezeigt. Daraus entsteht durch zeitliche Streckung eine verlängerte Pseudozufallscodefolge 54a mit einer Dauer 56a. Die kumulierte Gesamtdauer 58 der verkürzten Pseudozufallscodefolge 54 und der verlängerten Pseudozufallscodefolge 54a entspricht gerade dem doppelten der Gesamtdauer 52 der unverstimmten Pseudozufallscodefolge 50. Es ergibt sich demnach in der Summe aller Chips oder Pulse eine Gesamtdauer 58, die auch die unverstimmte doppelte Pulsfolge 50 hätte.

Um keine weiteren lokalen Maxima in dem Korrelationssignal zu erzeugen, sollte die zweite Pseudozufallscodefolge nicht mit der ersten Pseudozufallscodefolge übereinstimmen. Bei einer m-Sequenz lässt sich das ganz einfach durch Negation beziehungsweise Invertierung erreichen und ist deshalb auch in Form der invertierten unverstimmten Pseudozufallscodefolge 50a in der Figur 3 so gezeigt. Möglich ist auch die Verwendung völlig unterschiedlicher Sequenzen oder die Aufteilung einer längeren Sequenz in zwei Hälften. Letzteres lässt bei m-Sequenzen wegen deren ungerader Parität einen Chip übrig. Die Korrelationseinheit 40 muss für ihre Korrelation die verwendeten Pseudozufallscodefolgen kennen.

Figur 4 zeigt einen Korrelationsverlauf 66, der auf diese Weise aus einer zunächst verkürzten und dann verlängerten Pseudozufallscodefolge entstanden ist. Die Asymmetrie ist kompensiert und der Korrelationsverlauf 66 symmetrisch. Die zeitliche Lage des Korrelationsmaximums kann daher durch Approximation einer symmetrischen Funktion bestimmt werden, insbesondere einen Parabelfit. Dabei ist der Kurvenverlauf an sich einschließlich der Amplitude zunächst nicht von Interesse, sehr wohl aber die zeitliche Lage des Scheitelpunktes, weil dies bis auf einen möglichen konstanten Versatz dem gesuchten Empfangszeitpunkt entspricht.

Alternativ zu einer Symmetrisierung durch eine in zwei Teilsequenzen unterteilte Pseudozufallscodefolge ist auch denkbar, einzelnen Chips oder Gruppen von Chips unterschiedliche Längen zuzuweisen, so dass insgesamt das Zeitverhalten zu einem symmetrischen Korrelationsverlauf führt.

Der Signal-Rauschabstand kann durch die Anzahl der Chips oder Pulse eingestellt werden. Mit wachsender Anzahl von Chips steigt aber auch der Aufwand für die Korrelation. Die jeweils geeignete Wahl ist vorzugsweise in der Auswertungseinheit 32 parametrierbar. Damit ist eine einfache und intelligente Produktskalierung in Abhängigkeit von den anwendungsspezifischen Anforderungen möglich.

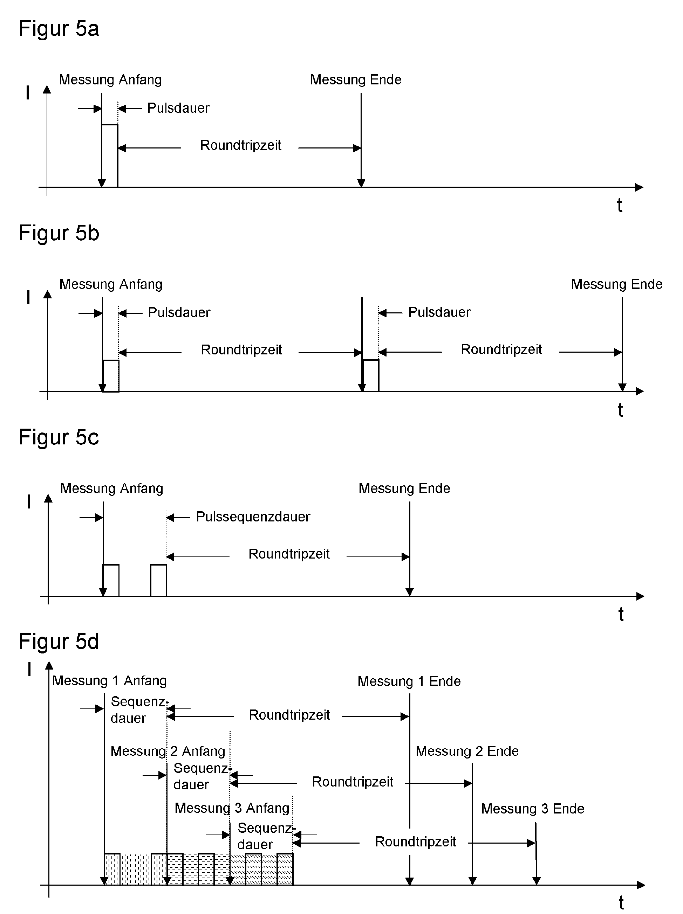

Wie im Folgenden anhand der Figur 5 erläutert, bietet das erfindungsgemäße Verfahren noch weitere Vorteile und mögliche Ausgestaltungen, mit denen auch die Winkelauflösung verbessert werden kann.

Figur 5a zeigt zunächst zum Vergleich ein Zeitschema für eine Lichtlaufzeitmessung mit einem Einzelpuls. Die Dauer für die Messung eines Abstandswerts berechnet sich als die Summe aus der Pulsdauer selbst und der sogenannten Roundtripzeit, also der Lichtlaufzeit bis zur maximalen Reichweite und zurück. Nimmt man als Beispiel wie oben eine Pulsdauer von 8ns und eine Reichweite von 100m, so ergibt sich eine Messperiode von ca. 700ns. Mit einem Einzelpulsverfahren ist aber die gewünschte Störfestigkeit nicht oder nur bei Einsatz extrem kostenaufwändiger Bauteile möglich.

Figur 5b zeigt als weiteren Vergleich ein Zeitschema für eine Lichtlaufzeitmessung mit einem Pulsmittelungsverfahren. Bei einer beispielhaften Mittelungstiefe von 64 wird zwar ein mit der Wurzel der Mittelungstiefe besseres Korrelationsergebnis erzielt. Es ist aber erforderlich, die Roundtripzeit nach jedem einzelnen Puls abzuwarten, so dass die Messperiode praktisch linear mit der Mittelungstiefe skaliert und sich eine Messperiode von ca. 47µs ergibt. Diese Messperiode, d.h. die Zeit für die Gewinnung eines vollständigen Messwerts, ist für Scannerapplikationen wichtig, weil sie bei gegebener Scanfrequenz die maximal mögliche Winkelauflösung festlegt. Bei einem Laserscanner 10 mit einer Drehfrequenz von 100Hz wird in 43µs ein Winkel von etwa 1,55° überstrichen. Das entspricht in 100m der erheblichen Strecke von 2,7m. Die Messperiode, nicht die physische Divergenz Laserspots begrenzt hier die Auflösung. Änderungen des Objektabstands innerhalb des während einer Messperiode überstrichenen Winkels, etwa durch kleine Objekte oder Kantentreffer, gehen undifferenziert in den Messwert ein und machen ihn schlimmstenfalls unbrauchbar.

Figur 5c zeigt ein Zeitschema für eine Lichtlaufzeitmessung mit einer Pseudozufallscodierung. Die Messperiode setzt sich hier aus der Dauer für das Aussenden der Pseudozufallscodefolge und nur einer einzigen Roundtripzeit zusammen, da die Chips unmittelbar nacheinander ausgesandt werden, ohne wie bei einem Mittelungsverfahren jeweils nach jedem Puls die Roundtripzeit abwarten zu müssen. Für 64 Pulse analog dem Beispiel der Figur 5b müssen allerdings 127 Chips verwendet werden, da die Hälfte der Chips einer m-Sequenz mit dem Wert Null belegt sind. Daraus ergibt sich mit den bisher verwendeten beispielhaften Zahlenwerten eine Messperiode von 127*8ns+2*100m/c ≈ 1,7µs, wobei c die Vakuumlichtgeschwindigkeit ist. Dadurch wird die mögliche Winkelauflösung auf 0,06° gesteigert. Dies entspricht in 100m Entfernung nur noch einer Strecke von 0,1 m. Genau betrachtet wird der Laserstrahl sogar in noch kleinerem Maße verbreitert, weil der Rückweg des Lichtes hierzu nicht mehr beiträgt. Die effektive Auflösung in 100m beträgt daher sogar nur 0,06m.

Figur 5d zeigt ein Zeitschema für mehrere parallele Messungen der Lichtlaufzeit bei Verwendung mehrerer orthogonaler Pseudozufallscodefolgen. Nach diesem Schema kann die Winkelauflösung noch weiter erhöht werden. Es werden einfach ständig und ohne zwischenzeitliches Abwarten der Roundtripzeit wechselnde Pseudozufallscodesequenzen ausgesandt. Figur 5d zeigt das Zeitschema für drei derartige parallele Messungen, aber dies kann ganz analog auch auf weitere parallele Messungen erweitert werden. Voraussetzung ist eine minimierte Korrelation zwischen den einzelnen Pseudozufallscodesequenzen, also deren möglichst gute paarweise Orthogonalität. Die gleiche Pseudozufallscodesequenz darf frühestens dann wieder eingesetzt werden, wenn nach dem vorhergehenden Aussenden die zugehörige Roundtripzeit verstrichen ist. Unter diesen Voraussetzungen sind die Pseudozufallscodesequenzen füreinander in der Korrelationseinheit 40 so unsichtbar wie Rauschen. Das Empfangssignal wird bei der Auswertung jeweils in Abschnitte unterteilt, welche gegeneinander um die Dauer einer Pseudozufallscodefolge versetzt sind und eine Länge entsprechend der Messperiode aufweisen. Dazu eignet sich eine überlappende Korrelation und Auswertung in mehreren Kanälen, nämlich vorzugsweise in gerade so vielen Kanälen, wie unterschiedliche Pseudozufallscodesequenzen verwendet werden. So ist eine Winkelauflösung erreichbar, die allein noch durch die Dauer der einzelnen Pseudozufallscodesequenz selbst und möglicherweise durch ein von Augenschutzbedingungen begrenztes Laserbudget limitiert ist.

In allen bisher beschriebenen Ausführungsformen wurden nur binäre Pseudozufallscodefolgen betrachtet, d.h. Rechtecksignale, die mit einem Bit quantisiert sind. Das macht das Verfahren einfach und unaufwändig. Höhere Quantisierungstiefen und andere Pulsformen führen zu höherem Aufwand, aber auch zu höheren Auflösungen in der Entfernungsmessung. Dies wiederum könnte zu einer ausgleichenden Einsparung in der Abtastrate genutzt werden.

## Patentansprüche

1. Optoelektronischer Sensor (10), insbesondere Laserscanner, zur Erfassung und Abstandsbestimmung von Objekten in einem Überwachungsbereich (20) mit einem Lichtsender (12) zum Aussenden eines mit einer Pseudozufallscodefolge modulierten Sendelichtstrahls (16) zu einem Sendezeitpunkt, einer Ablenkeinheit (18) zur periodischen Ablenkung des Sendelichtstrahls (16) in den Überwachungsbereich (20), einem Lichtempfänger (26) zum Erzeugen eines Empfangssignals aus dem von Objekten in dem Überwachungsbereich (20) remittierten oder reflektierten Sendelicht (22), einem A/D-Wandler (36) zur Abtastung des Empfangsignals, einer Korrelationseinheit (40) zum Erzeugen eines Korrelationssignals (62, 64, 66) durch Korrelation des abgetasteten Empfangssignals mit der Pseudozufallscodefolge und einer Auswertungseinheit (32), welche dafür ausgebildet ist, aus einem Korrelationsmaximum in dem Korrelationssignal (62, 64, 66) einen Empfangszeitpunkt und daraus anhand des Sendezeitpunkts über die Lichtlaufzeit von dem Sensor (10) zu einem Objekt einen Messwert für den Objektabstand zu bestimmen,
**dadurch gekennzeichnet,**
**dass** ein erstes Zeitraster der Codeelemente der Pseudozufallsfolge und ein zweites Zeitraster der Abtastung des Empfangssignals gegeneinander verstimmt sind, so dass die Dauer der einzelnen Codeelemente und die Abtastperiode zwischen zwei abgetasteten Werten des Empfangssignals voneinander abweichen.

2. Sensor (10) nach Anspruch 1,
wobei das erste Zeitraster so gewählt ist, dass die Codeelemente untereinander eine unterschiedliche Länge aufweisen, insbesondere in pseudozufälliger Weise.

3. Sensor (10) nach Anspruch 1 oder 2,
wobei das zweite Zeitraster durch eine Verjitterung der Abtastung in dem A/D-Wandler (36) verstimmt ist.

4. Sensor (10) nach Anspruch 1,
wobei das erste Zeitraster regelmäßig ist und relativ zu dem zweiten Zeitraster verkürzt oder verlängert ist.

5. Sensor (10) nach einem der vorhergehenden Ansprüche,
wobei die Verstimmung so gewählt ist, dass das Korrelationssignal (66) im Bereich des Korrelationsmaximums symmetrisch ist.

6. Sensor (10) nach Anspruch 5,
wobei das erste Zeitraster zum Aussenden einer ersten Pseudozufallscodefolge (54) verkürzt und dann zum Aussenden einer zweiten Pseudozufallscodefolge (54a) verlängert ist oder umgekehrt.

7. Sensor (10) nach Anspruch 6,
wobei sich die erste Pseudozufallscodefolge (54) und die zweite Pseudozufallscodefolge (54a) voneinander unterscheiden, insbesondere orthogonal zueinander sind, oder wobei die zweite Pseudozufallscodefolge (54a) die negierte erste Pseudozufallsfolge (54) ist.

8. Sensor (10) nach Anspruch 4,
wobei der A/D-Wandler (36) und die Korrelationseinheit (40) zwei Kanäle aufweisen, um das Empfangssignal in einem ersten Kanal mit einem verkürzten zweiten Zeitraster und in einem zweiten Kanal mit einem verlängerten zweiten Zeitraster abzutasten, die jeweiligen abgetasteten Empfangssignale einzeln mit der Pseudozufallscodefolge zu korrelieren und anschließend zu dem Korrelationssignal (66) aufzuaddieren.

9. Sensor (10) nach einem der Ansprüche 5 bis 8,
wobei die Auswertungseinheit (32) dafür ausgebildet ist, die zeitliche Position des Empfangsmaximums anhand einer symmetrischen Vergleichsfunktion aufzufinden, insbesondere mittels Parabelfit.

10. Sensor (10) nach einem der vorhergehenden Ansprüche,
wobei die Pseudozufallscodefolge eine m-Sequenz ist.

11. Sensor (10) nach einem der vorhergehenden Ansprüche,
der dafür ausgebildet ist, nach Aussenden einer Pseudozufallscodefolge nur eine der maximalen Messreichweite entsprechende Roundtripzeit abzuwarten und dann die nachfolgende Pseudozufallscodefolge auszusenden.

12. Sensor (10) nach einem der Ansprüche 1 bis 10,
der dafür ausgebildet ist, nach Aussenden einer Pseudozufallscodefolge sofort oder jedenfalls ohne eine der maximalen Messreichweite entsprechende Roundtripzeit abzuwarten die nächste Pseudozufallscodefolge auszusenden, wobei die Pseudozufallscodefolgen untereinander orthogonal sind.

13. Sensor (10) nach einem der vorhergehenden Ansprüche,
wobei zwischen Lichtempfänger (26) und A/D-Wandler (36) ein Filterelement (38) vorgesehen ist, um das unipolare Empfangssignal in ein bipolares Empfangssignal zu wandeln.

14. Verfahren zur Erfassung und Abstandsbestimmung von Objekten in einem Überwachungsbereich (20), bei dem ein mit einer Pseudozufallscodefolge modulierter Sendelichtstrahl (16) zu einem Sendezeitpunkt ausgesandt und periodisch in dem Überwachungsbereich (20) abgelenkt wird, aus dem von Objekten in dem Überwachungsbereich (20) remittierten oder reflektierten Sendelicht (22) ein Empfangssignal erzeugt wird, das anschließend abgetastet und mit der Pseudozufallscodefolge zu einem Korrelationssignal (62, 64, 66) korreliert wird, wobei aus einem Korrelationsmaximum in dem Korrelationssignal (62, 64, 66) ein Empfangszeitpunkt und daraus anhand des Sendezeitpunkts über die Lichtlaufzeit von dem Sensor (10) zu einem Objekt ein Messwert für den Objektabstand bestimmt wird,
**dadurch gekennzeichnet,**
**dass** ein erstes Zeitraster der Codeelemente der Pseudozufallsfolge und ein zweites Zeitraster der Abtastung des Empfangssignals gegeneinander verstimmt sind, so dass die Dauer der einzelnen Codeelemente und die Abtastperiode zwischen zwei abgetasteten Werten des Empfangssignals voneinander abweichen.

15. Verfahren nach Anspruch 14,
wobei die Verstimmung so gewählt ist, dass das Korrelationssignal (66) im Bereich des Korrelationsmaximums symmetrisch ist, indem das erste Zeitraster zum Aussenden einer ersten Pseudozufallscodefolge (54) verkürzt und dann zum Aussenden einer zweiten Pseudozufallscodefolge (54a) verlängert ist oder indem das Empfangssignal in einem ersten Kanal mit einem verkürzten zweiten Zeitraster und in einem zweiten Kanal mit einem verlängerten zweiten Zeitraster abgetastet wird und die jeweiligen abgetasteten Empfangssignale in den beiden Kanälen jeweils mit der Pseudozufallscodefolge korreliert und anschließend zu dem Korrelationssignal (66) aufaddiert werden.

## Claims

1. An optoelectronic sensor (10), in particular a laser scanner, for the detection and distance determination of objects in a monitoring area (20), the sensor (10) having a light transmitter (12) for transmitting a transmission light beam (16) modulated with a pseudorandom code sequence at a transmission point in time, a deflection unit (18) for periodically deflecting the transmission light beam (16) in the monitoring area (20), a light receiver (26) for generating a reception signal from transmission light (22) remitted or reflected by objects in the monitoring area (20), an A/D converter (36) for sampling the reception signal, a correlation unit (40) for generating a correlation signal (62, 64, 66) by correlating the sampled reception signal with the pseudorandom code sequence, and an evaluation unit (32) configured to determine a reception point in time from a correlation maximum of the correlation signal (62, 64, 66) and therefrom a measurement value for the object distance from the sensor (10) to an object based on the transmission point in time via the light time of flight,
**characterized in that** a first time grid of the code elements of the pseudorandom code sequence and a second time grid of the sampling of the reception signal are mutually detuned, so that the duration of the individual code elements and the sampling period between two sampled values of the reception signal differ from one another.

2. The sensor (10) according to claim 1,
wherein the first time grid is defined so that the code elements have a mutually different duration, in particular in a pseudorandom manner.

3. The sensor (10) according to claim 1 or 2,
wherein the second time grid is detuned by jittering the sampling in the A/D converter (36).

4. The sensor (10) according to claim 1,
wherein the first time grid is regular and shortened or extended with respect to the second time grid.

5. The sensor (10) according to any of the preceding claims,
wherein the detuning is defined so that the correlation signal (66) is symmetrical in the region of the correlation maximum.

6. The sensor (10) according to claim 5,
wherein the first time grid is shortened for transmitting a first pseudorandom code sequence (54) and subsequently extended for transmitting a second pseudorandom code sequence (54a) or vice versa.

7. The sensor (10) according to claim 6,
wherein the first pseudorandom code sequence (54) and the second pseudorandom code sequence (54a) are different, in particular orthogonal to each other, or wherein the second pseudorandom code sequence (54a) is the negated first pseudorandom code sequence (54).

8. The sensor (10) according to claim 4,
wherein the A/D converter (36) and the correlation unit (40) comprise two channels in order to sample the reception signal with a shortened second time grid in the first channel and with an extended second time grid in the second channel, to correlate the respective sampled reception signals individually with the pseudorandom code sequence and then to add them up to obtain the correlation signal (66).

9. The sensor (10) according to any of claims 5 to 8,
wherein the evaluation unit (32) is configured to locate the time position of the reception maximum based on a symmetric comparison function, in particular by means of parabolic fit.

10. The sensor (10) according to any of the preceding claims,
wherein the pseudorandom code sequence is an m-sequence.

11. The sensor (10) according to any of the preceding claims,
which is configured to wait, after transmitting a pseudorandom code sequence, only for a round trip time corresponding to a maximal measurement range and to then transmit the subsequent pseudorandom code sequence.

12. The sensor (10) according to any of claims 1 to 10,
which is configured to immediately after transmitting a pseudorandom code sequence, or at least without waiting for a round trip time corresponding to a maximal measurement range, transmit the subsequent pseudorandom code sequence, wherein the pseudorandom code sequences are orthogonal to each other.

13. The sensor (10) according to any of the preceding claims,
wherein a filter element (38) is arranged between light receiver (26) and A/D converter (36) in order to convert the unipolar reception signal into a bipolar reception signal.

14. A method for the detection and distance determination of objects in a monitoring area (20), wherein a transmission light beam (16) modulated with a pseudorandom code sequence is transmitted at a transmission point in time and is periodically deflected in the monitoring area (20), a reception signal is generated from transmission light (22) remitted or reflected by objects in the monitoring area (20), which subsequently is sampled and correlated with the pseudorandom code sequence to obtain a correlation signal (62, 64, 66), wherein there is determined a reception point in time from a correlation maximum of the correlation signal (62, 64, 66) and therefrom a measurement value for the object distance from the sensor (10) to an object based on the transmission point in time and the light time of flight,
**characterized in that** a first time grid of the code elements of the pseudorandom code sequence and a second time grid of the sampling of the reception signal are mutually detuned, so that the duration of the individual code elements and the sampling period between two sampled values of the reception signal differ from one another.

15. The method according to claim 14,
wherein the detuning is defined to that the correlation signal (66) is symmetrical in the region of the correlation maximum in that the first time grid is shortened for transmitting a first pseudorandom code sequence (54) and then is extended for transmitting a second pseudorandom code sequence (54a), or in that the reception signal is sampled in a first channel with a shortened second time grid and in a second channel with an extended second time grid, and wherein the respective sampled reception signals are each correlated with the pseudorandom code sequence in both channels and are subsequently added up to obtain the correlation signal (66).

## Revendications

1. Capteur optoélectronique (10), en particulier scanner laser pour détecter et déterminer la distance d'objets dans une zone de surveillance (20), comportant un émetteur de lumière (12) pour émettre un rayon lumineux d'émission (16) modulé avec une séquence de codes pseudo-aléatoires à un instant d'émission, une unité de déviation (18) pour la déviation périodique du rayon lumineux d'émission (16) dans la zone de surveillance (20), un récepteur de lumière (26) pour engendrer un signal de réception à partir de la lumière d'émission (22) réémise ou réfléchie par des objets dans la zone de surveillance (20), un convertisseur A/N (36) pour balayer le signal de réception, une unité de corrélation (40) pour engendrer un signal de corrélation (62, 64, 66) par la corrélation du signal de réception balayé avec la séquence de codes pseudo-aléatoires et une unité d'évaluation (32) qui est réalisée pour déterminer à partir d'un maximum de corrélation dans le signal de corrélation (62, 64, 66) un instant de réception et, à partir de là, à l'aide d'un instant d'émission, pour déterminer, avec le parcours de lumière depuis le capteur (10) vers un objet, une valeur de mesure pour la distance de l'objet,
**caractérisé en ce que**
une première trame temporelle des éléments de code de la séquence de codes pseudo-aléatoires et une deuxième trame temporelle du balayage du signal de réception sont désaccordées l'une par rapport à l'autre, de telle sorte que la durée des éléments de code individuels et la période de balayage entre deux valeurs balayées du signal de réception divergent l'une par rapport à l'autre.

2. Capteur (10) selon la revendication 1,
dans lequel la première trame temporelle est choisie telle que les éléments de code présentent entre eux une longueur différente, en particulier de manière pseudo-aléatoire.

3. Capteur (10) selon la revendication 1 ou 2,
dans lequel la deuxième trame temporelle est désaccordée par une instabilité du balayage dans le convertisseur A/N (36).

4. Capteur (10) selon la revendication 1.
dans lequel la première trame temporelle est régulière et raccourcie ou prolongée par rapport à la deuxième trame temporelle.

5. Capteur (10) selon l'une des revendications précédentes,
dans lequel le désaccord est choisi tel que le signal de corrélation (66) dans la plage du maximum de corrélation est symétrique.

6. Capteur (10) selon la revendication 5,
dans lequel la première trame temporelle pour émettre une première séquence de codes pseudo-aléatoires (54) est raccourcie et ensuite prolongée pour émettre une deuxième séquence de codes pseudo-aléatoires (54a) ou inversement.

7. Capteur (10) selon la revendication 6,
dans lequel la première séquence de codes pseudo-aléatoires (54) et la deuxième séquence de codes pseudo-aléatoires (54a) sont différentes l'une de l'autre, en particulier orthogonales l'une par rapport à l'autre ou la deuxième séquence de codes pseudo-aléatoires (54a) est la première séquence de codes pseudo-aléatoires (54) inversée.

8. Capteur (10) selon la revendication 4,
dans lequel le convertisseur A/N (36) et l'unité de corrélation (40) présentent deux canaux pour balayer le signal de réception dans un premier canal avec une deuxième trame temporelle raccourcie et dans un deuxième canal avec une deuxième trame temporelle prolongée, pour corréler individuellement les signaux de réception respectifs balayés avec la séquence de codes pseudo-aléatoires et les additionner ensuite au signal de corrélation (66).

9. Capteur (10) selon l'une des revendications 5 à 8,
dans lequel l'unité d'évaluation (32) est réalisée pour localiser la position temporelle du maximum de réception à l'aide d'une fonction de comparaison symétrique, en particulier au moyen d'un ajustement parabolique.

10. Capteur (10) selon l'une des revendications précédentes,
dans lequel la séquence de codes pseudo-aléatoires est une séquence m.

11. Capteur (10) selon l'une des revendications précédentes,
qui est réalisé pour attendre, après l'émission d'une séquence de codes pseudo-aléatoires, un seul temps d'aller-retour correspondant à la portée de mesure maximale et pour émettre ensuite la séquence de codes pseudo-aléatoires suivante.

12. Capteur (10) selon l'une des revendications 1 à 10,
qui est réalisé pour émettre, après l'émission d'une séquence de codes pseudo-aléatoires immédiatement ou en tout cas sans attendre un temps d'aller-retour correspondant à la portée de mesure maximale, la prochaine séquence de codes pseudo-aléatoires, les séquences de codes pseudo-aléatoires étant orthogonales les unes par rapport aux autres.

13. Capteur (10) selon l'une des revendications précédentes,
dans lequel il est prévu entre le récepteur de lumière (26) et le convertisseur A/N (36) un élément de filtre (38) pour convertir le signal de réception unipolaire en un signal de réception bipolaire.

14. Procédé de détection et de détermination de distance d'objets dans une zone de surveillance (20), dans lequel un rayon lumineux d'émission (16) modulé avec une séquence de codes pseudo-aléatoires est émis à un instant d'émission et dévié périodiquement dans la zone de surveillance (20) depuis laquelle, à partir de la lumière d'émission (22) réémise ou réfléchie par des objets dans la zone de surveillance (20), on engendre un signal de réception qui est ensuite balayé et corrélé avec une séquence de codes pseudo-aléatoires pour obtenir un signal de corrélation (62, 64, 66), un instant de réception est déterminé à partir d'un maximum de corrélation dans le signal de corrélation (62, 64, 66) et, à partir de là, à l'aide d'un instant d'émission, avec le temps de parcours de lumière depuis le capteur (10) vers un objet, une valeur de mesure est déterminée pour la distance de l'objet,
**caractérisé en ce que**
une première trame temporelle des éléments de code de la séquence de codes pseudo-aléatoires et une deuxième trame temporelle du balayage du signal de réception sont désaccordées l'une par rapport à l'autre, de telle sorte que la durée des éléments de code individuels et la période de balayage entre deux valeurs balayées du signal de réception divergent l'une par rapport à l'autre.

15. Procédé selon la revendication 14,
dans lequel le désaccord est choisi tel que le signal de corrélation (66) dans la plage du maximum de corrélation est symétrique par le fait que la première trame temporelle est raccourcie pour émettre une première séquence de codes pseudo-aléatoires (54) et est ensuite prolongée pour émettre une deuxième séquence de codes pseudo-aléatoires (54a) ou par le fait que le signal de réception est balayé dans un premier canal avec une deuxième trame temporelle raccourcie et dans un deuxième canal avec une deuxième trame temporelle prolongée, les signaux de réception respectifs balayés dans les deux canaux sont chacun corrélés avec la séquence de codes pseudo-aléatoires et additionnés ensuite au signal de corrélation (66).
